Europäisches Patentamt

(19) European Patent Office    (11) Veröffentlichungsnummer: **0 269 666**

Office européen des brevets    **B1**

(12)                    **EUROPÄISCHE PATENTSCHRIFT**

(45) Veröffentlichungstag der Patentschrifft:    (51) Int. Cl. ⁵: **F 16 C 11/04, F 16 M 11/04**
   **21.03.90**

(21) Anmeldenummer: **87903320.7**

(22) Anmeldetag: **04.06.87**

(86) Internationale Anmeldenummer:
   **PCT/EP 87/00290**

(87) Internationale Veröffentlichungsnummer:
   **WO 87/07688 (17.12.87 Gazette 87/28)**

(54) VERBINDUNGSEINRICHTUNG.

(30) Priorität: **06.06.86 DE 3619048**

(43) Veröffentlichungstag der Anmeldung:
   .**08.06.88 Patentblatt 88/23**

(45) Bekanntmachung des Hinweises auf die Patenterteilung:
   **21.03.90 Patentblatt 90/12**

⑧④ Bennante Vertragsstaaten:
   **AT CH DE FR GB IT LI**

(56) Entgegenhaltungen:
   **FR-A-1 043 718**
   **US-A-1 682 180**
   **US-A-2 220 216**

(73) Patentinhaber: **F.M.K. Kreuzer GmbH & Co. KG**
   **Benzstrasse 26**
   **D-8039 Puchheim (DE)**

(72) Erfinder: **KANDLER, Georg**
   **Wildweg 1**
   **D-8034 Germering (DE)**

(74) Vertreter: **Prüfer, Lutz H., Dipl.-Phys.**
   **Harthauser Strasse 25d**
   **D-8000 München 90 (DE)**

LIBERGRAF, STOCKHOLM 1990

2

## Beschreibung

Die Erfindung betrifft eine Verbindungseinrichtung nach dem Oberbegriff des Patentanspruches 1.

Eine derartige Verbindungseinrichtung ist aus der FR-A-1 043 718 bekannt und wird beispielsweise als Tragarm oder als Adapter für ein an einer Decke zu befestigendes Stativ verwendet. Der Tragarm besteht zum Erzeugen einer ausreichenden Beweglichkeit aus mehreren Tragarmteilen, die über kompliziert ausgebildete Gelenkmechanismen miteinander verbunden sind.

Aufgabe der Erfindung ist es, eine Verbindungseinrichtung zu schaffen, die vereinfacht herstellbar und montierbar ist.

Diese Aufgabe wird durch eine Verbindungseinrichtung der eingangs beschriebenen Art gelöst, die gekennzeichnet ist durch die Merkmale des Kennzeichens des Patentanspruches 1.

Weitere Merkmale und Zweckmäßigkeiten der Erfindung ergeben sich aus der Beschreibung von Ausführungsbeispielen anhand der Figuren. Von den Figuren zeigen:

Fig. 1 eine Seitenansicht der Verbindungseinrichtung, teilweise in weggebrochener bzw. geschnittener Darstellung;

Fig. 2 einen Schnitt entlang der Linie II - II in Fig. 1;

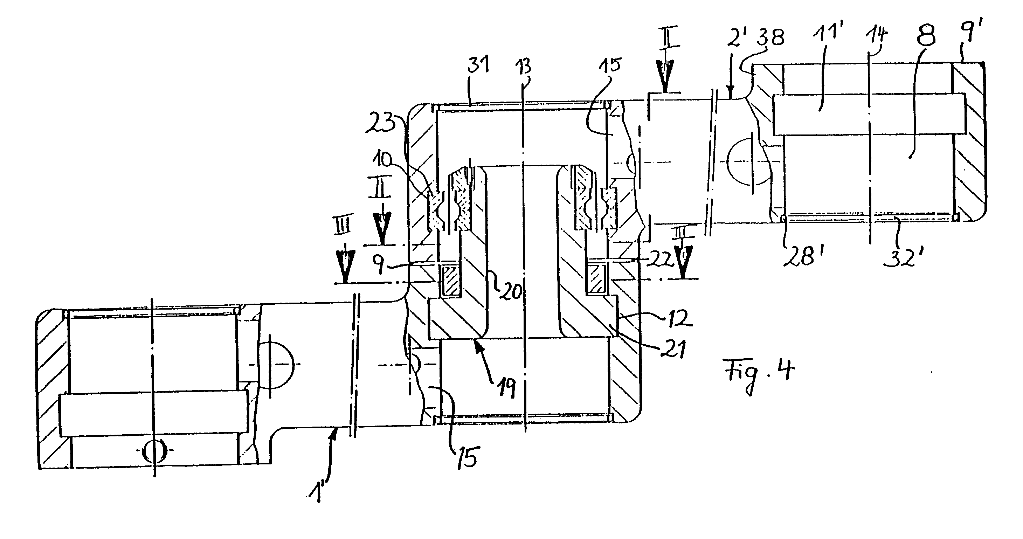

Fig. 3 einen Schnitt entlang der Linie III - III in Fig. 1; und

Fig. 4 eine Seitenansicht einer abgewandelten Ausführungsform in einer Fig. 1 entsprechenden Darstellung.

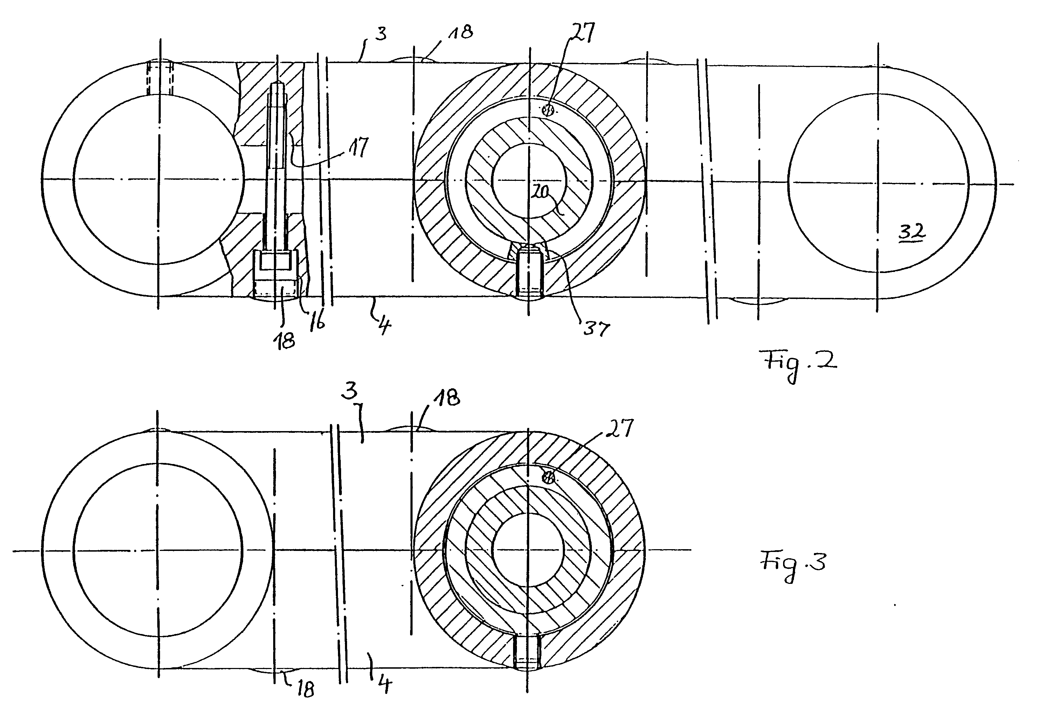

Die gezeigte Verbindungseinrichtung weist zwei miteinander verbundene Teile in Form eines ersten Tragarmes 1 und eines zweiten Tragarmes 2 auf. Jeder der Tragarme ist aus zwei halbschalenförmigen Teilstücken 3, 4, 5 gebildet. Jeweils zwei miteinander durch Schrauben verbundene Teilstücke 3, 4 weisen an ihren Enden zylindrische Bohrungen 6, 7, 8 auf. Jede der Bohrungen weist ferner in einem vorgegebenen Abstand gegenüber der die Bohrung umgebenden Stirnfläche 9, die dem zu verbindenden zweiten Teil gegenüberliegt, eine zylindrische rillenförmige Ausnehmung 10, 11, 12 auf. Die Teilstücke sind zu einer zwischen den beiden Längsachsen 13, 14 der Bohrungen 7, 8 liegenden und zu diesen parallel ausgerichteten Mittenachse punktsymmetrisch ausgebildet, d.h. also, daß die jeweiligen Teilstücke identische Form haben und lediglich entsprechend ihrer Symmetrie verdreht zueinander zu einem Ganzen zusammenzusetzen sind. Oberhalb der Ausnehmungen 10 - 12 weisen die Tragarme zwischen den endseitigen Bohrungen 7, 8 einen Hohlkanal 15 zur Durchführung von Kabeln auf. Jedes Teilstück weist in der am besten aus Figur 2 ersichtlichen Weise in einem Abstand von dem Rand eine Bohrung 16 zum Hindurchführen einer Schraube und im gleichen Abstand vom gegenüberliegenden Rand ein Innengewinde 17 zum Einschrauben der durch die Bohrung 16 geführten Schraube 18 auf. Mit diesen Schrauben werden die Teilstücke fest miteinander zu einem jeweiligen Tragarm verschraubt.

Zum Verbinden zweier derart ausgebildeter Tragarme ist ein Verbindungselement 19 vorgesehen. Das Verbindungselement umfaßt einen hohlzylindrischen Abschnitt 20. Dieser weist an einem Ende einen Bund 21 auf, dessen äußere Abmessungen so gewählt sind, daß er gerade in die Ausnehmung 10, 11, 12 eines halbschalenförmigen Teilstückes einsetzbar ist. In einem Abstand von dem Bund 21, der gleich dem zweifachen Abstand der jeweiligen Ausnehmung 10, 11, 12 zur Stirnfläche 9 plus einem zwischen den beiden Tragarmen erwünschten geringen Zwischenraumes 22 ist, weist das Verbindungselement 19 ein Lager 23 auf, welches vorzugsweise als Vierpunktlager ausgebildet ist. Die Abmessungen der äußeren Lagerschale des Lagers 23 sind gleich denen des Bundes 21. Das Lager ist durch eine Wellenmutter 24 und einen Gewindestift 25 mit seinem Lagerinnenring fest mit dem hohlzylindrischen Abschnitt 20 verbunden.

Unmittelbar benachbart zu dem Bund 21 ist ein Anschlagring 26 vorgesehen, der einen zu dem Lager hin hervorstehenden Anschlagzapfen 27 aufweist.

An der der Verbindungsstelle zwischen den beiden Tragarmen abgewandten Seite weisen die Bohrungen 6, 7, 8 jeweils Ausnehmungen zur Aufnahme eines mittels eines O-Ringes 28, 29, 30 einklemmbaren Abschlußdeckels 31, 32, 33 auf.

Zum Herstellen der Verbindung wird das Verbindungselement 19 zunächst mit dem Lager 23 in die Ausnehmung 10 eingesetzt. Dann wird ein zugehöriges entsprechend seitenverkehrtes zweites Teilstück aufgesetzt, und die beiden Teilstücke werden mittels Schrauben 18 miteinander so fest verbunden, daß das Lager 23 und damit das Verbindungselement 19 fest von den beiden Teilstücken 3, 4 umfaßt wird. Anschließend wird in entsprechender Weise der Bund 21 in die Ausnehmung 12 eines damit zu verbindenden Teilstückes eingesetzt. Ein gleiches und entsprechend verdrehtes Teilstück wird aufgesetzt, und die beiden Teilstücke werden mittels Schrauben 34, 35 fest miteinander verbunden, so daß der Bund 21 fest mit dem so gebildeten ersten Tragarm 1 verbunden ist. Über eine vorgesehene Gewindebohrung zwischen der Ausnehmung 10 und der Stirnfläche 9 wird eine Art Madenschraube eingeschraubt, die gewünschtenfalls mit dem entsprechend winkelmäßig einjustierten Anschlagzapfen 27 zum Begrenzen der Schwenkbewegung der beiden Tragarme 1, 2 zusammenwirkt.

Nach dem Zusammensetzen werden durch die Bohrung 6, das Innere des hohlzylindrischen Abschnittes 20, die Bohrung 7, den Hohlkanal 15 und die Bohrung 8 die erforderlichen Kabel von einem Tragarm zum anderen geführt. Nach dem Einfädeln der Kabel werden die Bohrungen durch die bereits beschriebenen Abschlußdeckel gegen Verschmutzung abgesperrt.

Statt der oben beschriebenen Madenschraube kann zum Zusammenwirken mit dem Anschlagstift auch der in Figur 2 gezeigte aus Hartgewebe gebildete Klotz 37 vorgesehen sein, der gleichzeitig als Bremse für die Schwenkbewegung einstellbar ist.

Bei der oben beschriebenen Ausführungsform wird die Länge jedes Tragarmes durch die schalenförmigen Teilstücke bestimmt. Grundsätzlich ist es in einer abgewandelten Ausführungsform möglich, die jeweiligen die Bohrung aufweisenden Teile und das Verbindungselement in gleicher Weise auszubilden, die zwischen den Bohrungen liegenden Tragarmstücke aber durch entsprechend ausgebildete Steckstücke zu verlängern.

Mit der oben beschriebenen Verbindungseinrichtung ist es möglich, mehrere gleichartige Tragarme, die jeweils durch die beschriebenen Verbindungselemente miteinander verbunden sind, fortlaufend zu verbinden, so daß der gesamte Tragarm beliebig erweiterbar ist.

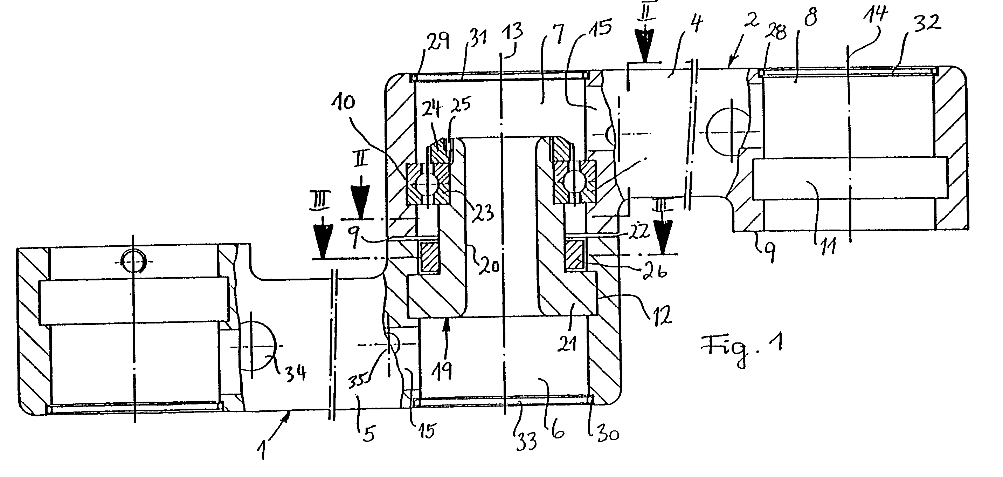

Bei der in Fig. 1 gezeigten Ausführungsform sind die beiden Stirnflächen 9 der ersten Bohrung 7 und der zweiten Bohrung 8 auf der gleichen Seite angeordnet. Die in Fig. 4 gezeigte Ausführungsform unterscheidet sich gegenüber dieser Ausführungsform insofern, als die Stirnfläche 9' um 180° gegen die Stirnfläche 9 versetzt ausgebildet ist. Entsprechend ist die Ausnehmung 11' in dem gleichen Abstand, den die Ausnehmung 11 von der Stirnfläche 9 aufweist, zur Stirnfläche 9' angeordnet. Der Abschlußdeckel 32' und der 0-Ring 28' sind entsprechend an dem der Stirnfläche 9 gegenüberliegenden Ende der Bohrung vorgesehen. Das die Stirnfläche 9' aufweisende freie Ende weist einen gegenüber der durch den Abschlußdeckel 31 abgedeckten Grundfläche hervorstehenden Ansatz 38 auf. Auf diese Weise hat die in der Stirnfläche 9' liegende Ebene einen Abstand von der durch den Abschlußdeckel 31 bzw. das dadurch abgedeckte Ende gehenden Ebene auf.

Auf diese Weise wird erreicht, daß das dem eigentlichen um die Achse 13 herum angeordneten Verbindungsteil gegenüberliegende freie Ende von erstem und zweitem Teil jeweils um 180° gegenüber dem die Verbindung bildenden Teil so ausgerichtet sind, daß ein Hindurchschwenken von dem ersten Teil 1' unter dem zweiten Teil 2' möglich ist.

## Patentansprüche

1. Verbindungseinrichtung mit einem ersten und einem damit zu verbindenden zweiten Teil (1, 2) und einem diese miteinander um eine Achse (13) schwenkbar verbindenden Verbindungselement (19), dadurch gekennzeichnet, daß eine zu der Achse (13) symmetrisch ausgerichtete Bohrung (6) in dem ersten Teil (1) und eine entsprechende Bohrung (7) in dem zweiten Teil (2) zum Aufnehmen des Verbindungselementes (19) und einen vorgegebenen Abstand aufweisende Ausnehmungen (10, 11; 12) in den Bohrungen (6; 7, 8) vom ersten und zweiten Teil (1, 2), und ein erster Bund (21) und ein zweiter Bund (23) an dem Verbindungselement (19), die den vorgegebenen Abstand zueinander aufweisen, wobei die Bunde (21, 23) in den Ausnehmungen (10, 11; 12) aufgenommen sind, vorgesehen sind und daß das erste und das zweite Teil (1, 2) jeweils durch eine durch die Achse (13) gehende Ebene in zwei Teilstücke (3, 4) unterteilt sind.

2. Verbindungseinrichtung nach Anspruch 1, dadurch gekennzeichnet, daß der zweite Bund (23) als Lager ausgebildet ist.

3. Verbindungseinrichtung nach Anspruch 1 oder 2, dadurch gekennzeichnet, daß wenigstens eines der Teile als Tragarm ausgebildet ist.

4. Verbindungseinrichtung nach Anspruch 3, dadurch gekennzeichnet, daß der Tragarm in einem Abstand von der Bohrung (7) eine weitere Bohrung (8) aufweist.

5. Verbindungseinrichtung nach Anspruch 4, dadurch gekennzeichnet, daß die beiden Bohrungen (7, 8) parallel zueinander sind.

6. Verbindungseinrichtung nach Anspruch 5, dadurch gekennzeichnet, daß die Ebene durch die Achsen der beiden Bohrungen (7, 8) geht.

7. Verbindungseinrichtung nach einem der Ansprüche 1 bis 5, gekennzeichnet durch eine Begrenzung der Schwenkbewegung.

8. Verbindungseinrichtung nach einem der Ansprüche 1 bis 6, dadurch gekennzeichnet, daß die Teilstücke jeweils gleich ausgebildet sind.

## Claims

1. Connecting device, having a first and a second part (1, 2), the second part to be connected to the first part, and a connecting element (19) connecting the said parts (1, 2) to each other swivellably about an axis (13), characterized in that there are provided a borehole (6) aligned symmetrically to the axis (13) in the first part (1) and a corresponding bore-hole (7) in the second part (2) to accommodate the connecting element (19) and recesses (10, 11, 12) in the bore-holes (6, 7, 8), having a specified distance from the first and second part (1, 2) and a first collar (21) and a second collar (23) on the connecting element (19), which collars (21, 23) have the specified distance from each other, the collars (21, 23) being accommodated in the recesses (10, 11, 12), and in that the first and the second part (1, 2) are each divided into two partial pieces (3, 4) by a plane passing through the axis (13).

2. Connecting device according to Claim 1, characterized in that the second collar (23) is constructed as a bearing.

3. Connecting device according to Claim 1 or 2, characterized in that at least one of the parts is constructed as a bearing arm.

4. Connecting device according to Claim 3, characterized in that the bearing arm has a further bore-hole (8) at a distance from the bore-hole (7).

5. Connecting device according to Claim 4, characterized in that the two bore-holes (7, 8) are parallel to each other.

6. Connecting device according to Claim 5, characterized in that the plane passes through the axes of the two bore-holes (7, 8).

7. Connecting device according to one of Claims 1 to 5, characterized by a limitation of the swivel movement.

8. Connecting device according to one of Claims 1 to 6, characterized in that the partial pieces each have the same construction.

**Revendications**

1. Dispositif d'assemblage comprenant une première partie (1) une deuxième partie qu'il s'agit d'assembler à la première (2), et un élément d'assemblage (19) qui assemble ces deux parties l'une à l'autre en leur permettant de pivoter autour d'un axe (13) caractérisé en ce qu'un perçage (6) orienté symétriquement à l'axe (13), ménagé dans la première partie (1), et un perçage correspondant (7) ménagé dans la deuxième partie (2) sont prévus pour recevoir l'élément d'assemblage (19) et il est prévu des évidements (10, 11; 12) disposés à un écartement prédéterminé dans les perçages (6; 7, 8) de la première partie et de la deuxième partie; et il est prévu sur l'élément d'assemblage (19) une première embase (21) et une deuxième embase (23) qui présentent entre elles ledit écartement prédéterminé, les embases (21, 23) se logeant dans les évidements (10, 11; 12), et en ce que la première partie (1) et la deuxième partie (2) sont divisées chacune en deux éléments partiels (3, 4) par un plan qui passe par l'axe (13).

2. Dispositif d'assemblage selon la revendication 1, caractérisé en ce que la deuxième embase (23) est constituée par un coussinet.

3. Dispositif d'assemblage selon l'une des revendications 1 ou 2, caractérisé en ce qu'au moins l'une des parties constitue un bras porteur.

4. Dispositif d'assemblage selon la revendication 3, caractérisé en ce que le bras porteur présente un autre perçage (8) à un certain écartement du perçage (7).

5. Dispositif d'assemblage selon la revendication 4, caractérisé en ce que les deux perçages (7, 8) sont parallèles l'un à l'autre.

6. Dispositif d'assemblage selon la revendication 5, caractérisé en ce que le plan passe par les axes des deux perçages (7, 8).

7. Dispositif d'assemblage selon l'une des revendications 1 à 5, caractérisé par une limitation du mouvement de pivotement.

8. Dispositif d'assemblage selon l'une des revendications 1 à 6, caractérisé en ce que les éléments partiels sont de même configuration.

Fig. 1

Fig. 2

Fig. 3

Fig. 4

EP 0 269 666 B1